Europäisches Patentamt

(19) European Patent Office  (11) Publication number: **0 079 677**
**B1**
Office européen des brevets

(12) **EUROPEAN PATENT SPECIFICATION**

(45) Date of publication of patent specification: **05.02.86**  (51) Int. Cl.⁴: **B 60 R 1/06**

(21) Application number: **82305409.3**

(22) Date of filing: **12.10.82**

(54) **Exterior rear view mirror.**

(30) Priority: **22.10.81 GB 8131941**

(43) Date of publication of application:
**25.05.83 Bulletin 83/21**

(45) Publication of the grant of the patent:
**05.02.86 Bulletin 86/06**

(84) Designated Contracting States:
**DE FR GB IT**

(56) References cited:
**EP-A-0 018 294**
**DE-U-7 507 390**
**US-A-4 186 905**

(73) Proprietor: **BRITAX (WINGARD) LIMITED**
**Chandler Road**
**Chichester Sussex, PO19 2UG (GB)**

(72) Inventor: **Boddy, Ian**
**9 Green Court Drive**
**Bognor Regis West Sussex (GB)**

(74) Representative: **Hollinghurst, Antony**
**Britax Division (Patents) Kingsham Road**
**Chichester West Sussex PO19 2UG (GB)**

Courier Press, Leamington Spa, England.

## Description

This invention relates to an exterior rear view mirror comprising a support adapted to be fixed to the body of the vehicle and having a first annular detent formation located at a first radius from a substantially vertical axis, a mirror housing pivotally mounted on the support for angular movement about said vertical axis and having a first complementary annular detent formation confronting said first detent formation at the same radius from said vertical axis, and resilient means for urging said detent formations into abutment with each other to retain the mirror housing at a first orientation relative to the support.

Such a mirror is commonly retained in its position of normal use by a spring-loaded detent device. In order to minimise wear on the interengaging detent surfaces, the detent device is so arranged that the mirror is held stationary when in its position of normal use and, when displaced therefrom, is free to move over sufficient range to fold to the side of the vehicle both forwardly and backwardly. Thus when the mirror is displaced by an impact, the interengaging detent surfaces rub over one another only during their initial movement out of engagement. A mirror of this type is disclosed in US—A—4186905.

In mirrors of the foregoing type, the limited range of lateral adjustment is usually less than the difference in required orientation between a mirror on the driver's side of the vehicle and a mirror on the passenger's side of the vehicle which, being further from the driver's head in the transverse direction of the vehicle, has to be oriented at a greater angle to such transverse direction than the mirror on the driver's side. Since left-hand and right-hand mirror housings differ from one another, four different versions of the mirror are required to provide for both left-hand drive and right-hand drive vehicles.

According to the invention, in a rear view mirror of the type described above, the support has a second detent formation located at a second radius from said vertical axis and the mirror housing has a second complementary detent formation at said second radius from the vertical axis confronting said second detent formation so as to be urged into engagement therewith by said resilient means so as to retain the said mirror housing in a second orientation relative to the support, the difference between the first and second radii being such as to prevent engagement of the first detent formation with the second complementary detent formation and engagement of the second detent formation with the first complementary detent formation.

In one form of the invention, one of the first detent formation and the first complementary detent formation comprises an isolated tooth and the other of the first detent formation and the first complementary detent formation comprises a pair of teeth arranged to embrace the isolated tooth when the housing is in its first orientation relative to the support and one of the second detent formation and the second complementary detent formation comprises an isolated tooth and the other of the second detent formation and the second complementary detent formation comprises a pair of teeth arranged to embrace its corresponding isolated tooth when the housing is in its second orientation relative to the support. When the isolated teeth are clear of the corresponding pair of teeth, they are free to move without interference. Where there are three such sets spaced at 120 deg to one another, teeth of one set will not reach the teeth of an adjacent set during normal use because the maximum deflection as a result of impact is approximately 90 deg from its position of normal use to abutment with the side of the vehicle.

An embodiment of the invention will now be described, with reference to the accompanying drawing, in which:

Figure 1 is a partially broken away side view of a mirror in accordance with the invention;

Figure 2 is a plan view of the support of Figure 1 after removal of the mirror housing, and

Figure 3 is a fragmentary cross-sectional view taken on the line 3—3 in Figure 2 and also showing the adjacent part of the mirror housing.

Referring to the drawing, the mirror 10 is mounting on a base plate 12 within a housing 14, the base plate being coupled to means for adjusting the orientation of the mirror 10 relative to the housing 14 by universal joints 16. A sleeve 18 projects downwardly from the bottom of the housing 14 so as to embrace a stem 20 projecting upwardly from a support 22 which is adapted to be secured to a part of a motor vehicle for example, the driver's or front passenger's door.

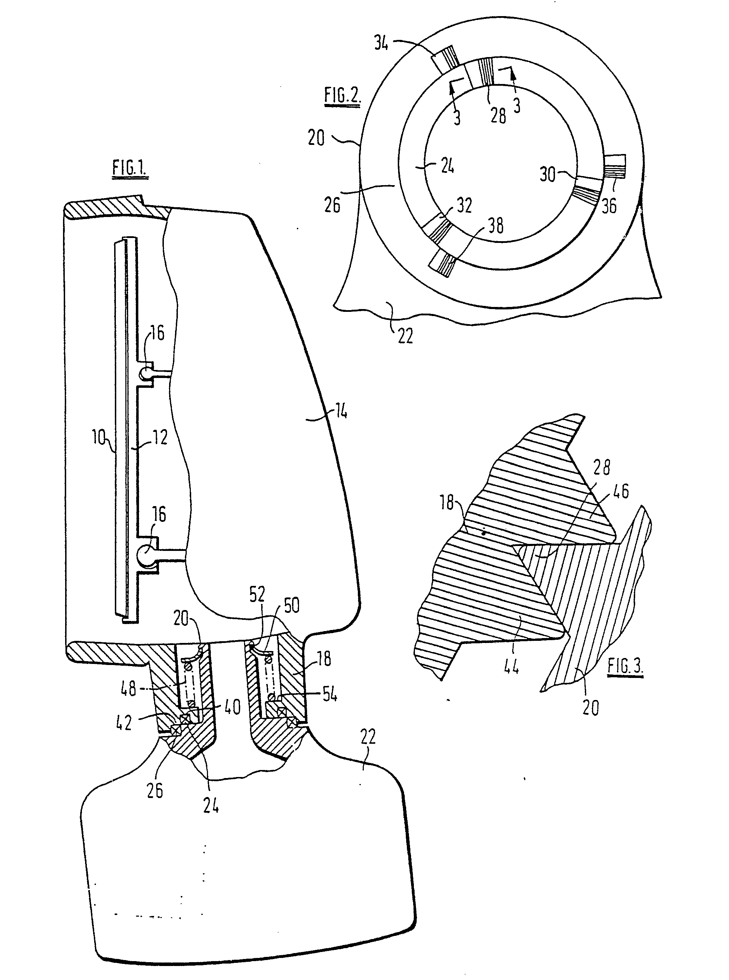

The bottom of the stem 20 is surrounded by first and second annular detent formations comprising concentric toothed tracks 24 and 26. As can be seen from Figure 2, the track 24 has three triangular teeth 28, 30 and 32 spaced at 120 deg to one another with flat troughed zones between the teeth. The outer track 26 also has three triangular teeth 34, 36 and 38 spaced at 120 degrees to one another but offset with respect to the corresponding teeth 28, 30 and 32 of the inner track by about 15 degrees. As with the inner track, the troughs between the teeth 34, 36 and 38 of the outer track are flat.

The bottom end of the sleeve 18 has first and second complementary detent formations comprising inner and outer tracks 40 and 42. As can be seen from Figure 3, the track 40 has a pair of teeth 44 and 46 with a triangular trough therebetween in which the tooth 28 on the track 24 can be received. The track 40 has similar pairs of teeth (not shown in Figure 3) spaced at 120 degrees to one another so as to engage with the teeth 30 and 32 simultaneously with the engagement of the teeth 44 and 46 with the tooth 28. The outer track 42 on the stem 18 also has three pairs of teeth spaced at 120 degrees to one another, each having a triangular trough therebetween for engagement with the teeth 34, 36 and 38 on outer

2

0 079 677

track 26 and base. However, the pairs of teeth on the outer track 42 on the stem 18 are aligned with the pairs of teeth on the inner track 40 thereon so that the orientation of the mirror housing 14 with respect to the support 22 at which the teeth of the outer track 26 and 42 engage with one another, is offset by about 15 degrees with respect to that at which the teeth of the inner tracks 24 and 40 engage with one another.

Reverting to Figure 1, in order to hold the housing 14 on the support 22 with the tracks 24, 40 and 26, 42 in engagement with one another, a compression spring 48 is located between a washer 50 which engages under a shoulder 52 on the top of the stem 20, and an inwardly directed shoulder 54 on the stem 18 above the inner track 24. Thus when the mirror housing 14 is in an orientation such that the teeth of say the inner tracks 24 and 40 are in engagement with one another these teeth are resiliently held in such engagement, but if sufficient force is applied to the housing 14 such teeth can become disengaged. If the force is in one direction, the mirror housing moves initially through about 15 degrees so as to bring the teeth on the outer tracks 26 and 42 into alignment. If the force continues, the teeth of the outer tracks 26 and 42 become disengaged and the mirror housing 14 is then free to move through about 100 degrees (unless it collides with a part of the vehicle on which it is mounted before its range of movement has been completed). If the force is applied in the other direction the mirror housing 14 is immediately displaced into a position in which such free movement is permitted.

It will be appreciated from the foregoing that during each occasion on which the mirror housing is displaced from its orientation of normal use, each of the teeth of the tracks 24, 26 and 40, 42 is subject to impact and/or abrasion on one occasion only, while the provision of the two separate offset tracks provides the mirror housing 14 with two alternative positions of normal use, thus catering for both right-hand drive and left-hand drive vehicles.

## Claims

1. An exterior rear view mirror comprising a support (22) adapted to be fixed to the body of the vehicle and having a first annular detent formation (24) located at a first radius from a substantially vertical axis (20), a mirror housing (14) pivotally mounted on the support (22) for angular movement about said vertical axis (20) and having a first complementary annular detent formation (40) confronting said first detent formation (24) at the same radius from said vertical axis (20), and resilient means (48) for urging said detent formations (24, 40) into abutment with each other to retain the mirror housing (14) at a first orientation relative to the support (22), characterised in that the support (22) has a second detent formation (26) located at a second radius from said vertical axis (20) and the mirror housing has a second complementary detent formation (42) at said second radius from the vertical axis (20) confronting said second detent formation (26) so as to be urged into engagement therewith by said resilient means (48) so as to retain the said mirror housing (14) in a second orientation relative to the support (22), the difference between the first and second radii being such as to prevent engagement of the first detent formation (24) with the second complementary detent formation (42) and engagement of the second detent formation (26) with the first complementary detent formation (40).

2. A mirror according to claim 1, characterised in that one of the first detent formation (24) and the first complementary detent formation (40) comprises an isolated tooth (28, 30, 32) and the other of the first detent formation (24) and the first complementary detent formation (40) comprises a pair of teeth (44, 46) arranged to embrace the isolated tooth (28) when the housing (14) is in its first orientation relative to the support (22) and one of the second detent formation (26) and the second complementary detent formation (42) comprises an isolated tooth (34, 36, 38) and the other of the second detent formation (26) and the second complementary detent formation (42) comprises a pair of teeth arranged to embrace its corresponding isolated tooth (34, 36, 38) when the housing (14) is in its second orientation relative to the support (22).

3. A mirror according to claim 2, characterised in that sets of isolated teeth (18, 30, 32; 34, 36, 38) and sets of pairs of teeth (44, 46) are uniformly spaced around the substantially vertical axis (20).

## Revendications

1. Miroir rétroviseur extérieur comprenant un support (22) agencé pour être fixé au châssis du véhicule et ayant un premier moyen d'arrêt annulaire (24) situé à un premier rayon à partir d'un axe sensiblement vertical (20), un boîtier de miroir (14) articulé sur le support (22) en vue d'un mouvement angulaire autour dudit axe vertical (20), un premier moyen d'arrêt annulaire complémentaire (40) opposé audit premier moyen (24) au même rayon à partir dudit axe vertical (20) et un moyen élastique (48) pour pousser lesdits moyens d'arrêt (24, 40) en contact l'un avec l'autre afin de retenir le boîtier de miroir (14) dans une première orientation par rapport au support (22), caractérisé en ce que le support (22) comprend un deuxième moyen d'arrêt (26) situé à un deuxième rayon à partir dudit axe vertical (20) et le boîtier de miroir présente un deuxième moyen d'arrêt complémentaire (42) audit deuxième rayon à partir de l'axe vertical (20) opposée audit deuxième moyen d'arrêt (26) afin d'être mis en contact avec lui par le moyen élastique (48) pour retenir le boîtier de miroir (14) dans une seconde orientation par rapport au support (22), la différence entre le premier et le deuxième rayon était telle qu'elle empêche le contact du premier moyen d'arrêt (24) avec le deuxième moyen

3

d'arrêt complémentaire (42) et le contact du deuxième moyen d'arrêt (26) avec le premier moyen d'arrêt complémentaire (40).

2. Miroir rétroviseur selon la revendication 1, caractérisé en ce que l'un du premier moyen d'arrêt (24) et du premier moyen d'arrêt complémentaire (40) comprend une dent isolée (28, 30, 32) et l'autre du premier moyen d'arrêt (24) et du premier moyen d'arrêt complémentaire (40) comprend une paire de dents (44, 46) agencées pour entourer la dent isolée (28) lorsque le boîtier (14) est dans sa première orientation par rapport au support (22) et l'un du second moyen d'arrêt (26) et du second moyen d'arrêt complémentaire (42) comprend une dent isolée (34, 36, 38) et l'autre du second moyen d'arrêt (26) et du second moyen d'arrêt complémentaire (42) comprend une paire de dents agencées pour entourer sa dent isolée correspondante (34, 36, 38) quand le boîtier (14) est dans sa seconde orientation par rapport au support (22).

3. Miroir rétroviseur selon la revendication 2, caractérisé en ce que des jeux de dents isolées (18, 30, 32; 34, 36, 38) et des jeux de paires de dents (44, 46) sont uniformément espacés autour de l'axe sensiblement vertical (20).

## Patentansprüche

1. Außenrückspiegel, mit einem Sockel (22), der an einer Fahrzeugkarosserie befestigt werden kann und der eine erste ringförmige Sperreinrichtung (24) aufweist, die bei einem ersten Radius bezüglich einer etwa vertikalen Achse (20) angeordnet ist, einem Spiegelgehäuse (14), welches schwenkbar auf dem Sockel (22) montiert ist, so daß es um die vertikale Achse (20) eine Kreisbewegung vollziehen kann, und welches eine erste komplementäre ringförmige Sperreinrichtung (40) aufweist, die der ersten Sperreinrichtung (24) bei dem gleichen Radius bezüglich der vertikalen Achse (20) gegenüberliegt, sowie elastischen Mitteln (48), welche die Sperreinrichtungen (24, 40) in Eingriff miteinander bringen, um das Spiegelgehäuse (14) in einer ersten Orientierung bezüglich des Sockels (22) zu halten, dadurch gekennzeichnet, daß der Sockel (22) eine zweite Sperreinrichtung (26) besitzt, die bei einem zweiten Radius bezüglich der vertikalen Achse (20) angeordnet ist, während das Spiegelgehäuse eine zweite komplementäre Sperreinrichtung (42) bei dem zweiten Radius bezüglich der vertikalen Achse (20) besitzt, welche der zweiten Sperreinrichtung (26) derart gegenüberliegt, daß sie durch die elastischen Mittel (48) mit dieser in Eingriff gebracht wird, um das Spiegelgehäuse in einer zweiten Orientierung bezüglich des Sockels (22) zu halten, wobei der Unterschied zwischen dem ersten und dem zweiten Radius so groß ist, daß ein In-Eingriff-Kommen der ersten Sperreinrichtung (24) mit der zweiten komplementären Sperreinrichtung (42) sowie ein In-Eingriff-Kommen der zweiten Sperreinrichtung (26) mit der ersten komplementären Sperreinrichtung (40) verhindert wird.

2. Spiegel nach Anspruch 1, dadurch gekennzeichnet, daß die erste Sperreinrichtung (24) oder die erste komplementäre Sperreinrichtung (40) einen einzelnen Zahn (28, 30, 32) aufweist, während die erste komplementäre Sperreinrichtung (40) bzw. die erste Sperreinrichtung (24) ein Paar Zähne (44, 46) aufweist, die derart angeordnet sind, daß sie den einzelnen Zahn (28) umgreifen, wenn sich das Gehäuse (14) in seiner ersten Orientierung bezüglich des Sockels (22) befindet, und daß die zweite Sperreinrichtung (26) oder die zweite komplementäre Sperreinrichtung (42) einen einzelnen Zahn (34, 36, 38) aufweist, während die zweite komplementäre Sperreinrichtung (42) bzw. die zweite Sperreinrichtung (26) ein Paar Zähne aufweist, die derart angeordnet sind, daß sie den entsprechenden einzelnen Zahn (34, 36, 38) umgreifen, wenn sich das Gehäuse (14) in seiner zweiten Orientierung bezüglich des Sockels (22) befindet.

3. Spiegel nach Anspruch 2, dadurch gekennzeichnet, daß Sätze von einzelnen Zähnen (18, 30, 32; 34, 36, 38) sowie Sätze von Zahnpaaren (44, 46) gleichförmig um die etwa vertikale Achse (20) beabstandet sind.

FIG.1.

FIG.2.

FIG.3.